# EUROPÄISCHE PATENTSCHRIFT

(11) **EP 3 403 049 B1**
(45) Veröffentlichungstag und Bekanntmachung des Hinweises auf die Patenterteilung: **27.04.2022**
(21) Anmeldenummer: 16826313.5
(22) Anmeldetag: 20.12.2016
(51) Int. Cl.: B23Q 17/24, B23Q 17/22, G01B 5/008

(54) **VERFAHREN ZUR BESTIMMUNG VON EINER X-Y-Z-REFERENZKOORDINATE EINES WERKSTÜCKS UND BEARBEITUNGSMASCHINE**
METHOD FOR DETERMINING AN X-Y-Z REFERENCE COORDINATE OF A WORKPIECE, AND MACHINE TOOL
PROCÉDÉ DE DÉTERMINATION D'UNE COORDONNÉE DE RÉFÉRENCE X-Y-Z D'UNE PIÈCE ET MACHINE D'USINAGE

(30) Priorität: 11.01.2016 DE 102016100308
(43) Veröffentlichungstag der Anmeldung: 21.11.2018
(73) Patentinhaber: Datron AG, 64367 Mühltal-Traisa (DE)
(72) Erfinder: BÖCK, Benjamin, 64395 Brensbach (DE); LEINFELDER, Gregor, 64319 Pfungstadt (DE); BARNIKOL, Maximilian, 64354 Reinheim (DE)
(74) Vertreter: Habermann Intellectual Property Partnerschaft von Patentanwälten mbB
(86) Internationale Anmeldenummer: PCT/EP2016/081955
(87) Internationale Veröffentlichungsnummer: WO 2017/121585

(56) Entgegenhaltungen:
- EP-A1- 1 777 483
- EP-A1- 2 738 515
- EP-A1- 2 749 840
- DE-A1- 4 327 250
- KR-B1- 101 548 299

## Beschreibung

Die Erfindung betrifft ein Verfahren zur Bestimmung von einer Referenzkoordinate eines in einer Bearbeitungsmaschine angeordneten Werkstücks.

Während der Herstellung und Bearbeitung eines Werkstücks mit einer Bearbeitungsmaschine kann es aus verschiedenen Gründen zweckmäßig sein, das Werkstück zu referenzieren, um dessen Position innerhalb der Bearbeitungsmaschine möglichst genau festzustellen. So können beispielsweise Anschläge oder Spannvorrichtungen verwendet werden, die eine Positionierung des Werkstücks in einer durch die Anschläge oder die Spannvorrichtung erzwungenen Position mit hoher Präzision vorgeben können. Allerdings ist es in vielen Fällen wünschenswert, entweder zusätzlich oder stattdessen mindestens eine Referenzkoordinate des in der Bearbeitungsmaschine angeordneten Werkstücks durch eine Messung zu bestimmen, um anhand der Referenzkoordinate die tatsächliche Position und gegebenenfalls auch Ausrichtung des Werkstücks in der Bearbeitungsmaschine zu ermitteln.

Selbst bei einem Werkstück, dessen Anordnung auf einer Werkzeugtischoberfläche in X-Richtung und Y-Richtung beispielsweise durch seitliche Anschläge vorgegeben ist, kann durch eine Referenzierung die Höhe der Oberfläche in Z-Richtung mit einer hohen Präzision nachgemessen werden, um einen nachfolgenden Bearbeitungsschritt mit großer Genauigkeit durchführen zu können. Es ist ebenfalls denkbar, ein Bearbeitungsverfahren zu unterbrechen und das Werkstück aus der Bearbeitungsmaschine herauszunehmen, um es zu einem späteren Zeitpunkt entweder in derselben Bearbeitungsmaschine oder aber in einer anderen Bearbeitungsmaschine neu anzuordnen und einen nachfolgenden Bearbeitungsschritt durchzuführen. Um die Bearbeitung des erneut in einer Bearbeitungsmaschine angeordneten Werkstücks durchführen und gegebenenfalls nach einer erneuten Anordnung mit einer hohen Genauigkeit weiterführen und abschließen zu können, muss die Position des Werkstücks innerhalb der Bearbeitungsmaschine möglichst präzise erneut ermittelt werden und eine Referenzierung durchgeführt werden.

Aus der Praxis ist es bekannt, dass mit einem berührungsempfindlichen Messtaster eine Referenzkoordinate des Werkstücks durch Abtasten eines Messpunkts oder mehrerer Messpunkte einer Oberfläche des Werkstücks ermittelt werden kann. Eindimensionale oder mehrdimensionale Referenzkoordinaten können mit dem Messtaster vollständig manuell ermittelt werden, wobei ein Benutzer den Messtaster steuert und den Messtaster an einem Messpunkt oder oftmals an mehreren Messpunkten der Oberfläche des Werkstücks bis zur Berührung des Werkstücks heranführt.

Das Dokument KR101548299 B1 beschreibt eine Bearbeitungsmaschine für die Bearbeitung eines Werkstücks und ein Verfahren zur Bestimmung von X-Y-Z Referenzkoordinate des in der Bearbeitungsmaschine angeordneten Werkstücks.

Weiterhin ist es denkbar, dass eine berührungslose Messung des Abstands der Oberfläche des Werkstücks zu einer vorgegebenen und präzise bekannten Referenzposition innerhalb der Bearbeitungsmaschine durchgeführt wird, wobei beispielsweise Laser-Triangulationsverfahren, optische oder akustische Messverfahren eingesetzt werden können.

Es sind auch automatisiert ablaufende Ermittlungsverfahren entwickelt worden, die in der Praxis üblicherweise eingesetzt werden. Nach einer entsprechenden Koordinaten- und Parametereingabe durch den Benutzer wird mit dem Steuerungsprogramm der Bearbeitungsmaschine ein automatisiert ablaufendes Ermittlungsverfahren zur Bestimmung der Referenzkoordinate durchgeführt. Zu diesem Zweck kann beispielsweise ein Messtaster entsprechend verfahren werden. Ausgehend von einer Ausgangskoordinate, die auf der Oberfläche oder in der Nähe des Werkstücks vorgegeben wird, führt der Messtaster eine oder mehrere vorab vorgegebene Messfahrten durch, um durch eine Annäherung und Berührung des Werkstücks während der Messfahrten mindestens eine Referenzkoordinate zu bestimmen. Beispielsweise können für die Ermittlung einer rechtwinkligen Ecke eines Werkstücks, nachdem zunächst deren Z-Referenzkoordinate ermittelt wurde, anschließend zwei Messfahrten durchgeführt werden, wobei der Messtaster auf beiden Seiten benachbart zur Ecke jeweils möglichst senkrecht an die betreffende Seitenkante des Werkstücks herangeführt wird, um die Position der beiden Seitenkanten und darüber die Position der Ecke zu ermitteln. Sowohl die Ausgangskoordinate als auch die einzelnen Parameter für die Messfahrten während des automatisiert ablaufenden Ermittlungsverfahrens müssen von einem Benutzer eingegeben werden. Auch bei berührungslos messenden Messeinrichtungen können automatisiert ablaufende Ermittlungsverfahren definiert und vorgegeben werden, um dadurch beispielsweise aus verschiedenen Richtungen optische oder akustische Abstandsmessungen durchzuführen und die Messergebnisse auswerten zu können.

Weiterhin ist es aus der Praxis bekannt, dass ein Benutzer über eine Bedieneinrichtung der Bearbeitungsmaschine die einzelnen Werte manuell eingibt, die für die Ausgangskoordinate und für die verschiedenen Parameter der einzelnen Messfahrten während des automatisiert ablaufenden Ermittlungsverfahrens benötigt werden. Diese manuelle Eingabe der einzelnen Werte und Parameter kann zum Teil dadurch erleichtert oder vereinfacht werden, dass der Messtaster von dem Benutzer manuell an die Ausgangskoordinate herangeführt wird, um anschließend in dem automatisiert ablaufenden Ermittlungsverfahren die einzelnen Messfahrten des Messtasters gemäß den über die Bedieneinrichtung eingegebenen Parametern durchzuführen. Eine manuelle Heranführung des Messtasters erfordert jedoch insbesondere bei einer stark zerklüfteten Oberfläche eines Werkstücks große Sorgfalt und Erfahrung, um während der Annäherung eine unbeabsichtigte Kollision mit dem Werkstück zu vermeiden.

Es hat sich gezeigt, dass die Eingabe der Ausgangskoordinaten und der einzelnen Parameter für die Messfahrten des Messtasters zeitaufwendig und fehleranfällig sind. Die manuelle Eingabe einer größeren Anzahl von Koordinatenwerten und Parameter ist zudem zeitaufwendig und erfordert große Konzentration bei der Eingabe, da beispielsweise ein versehentlich falsch eingegebenes Vorzeichen oder ein falsch gesetztes Komma bei einer Werteingabe zu einer unerwünschten Verlagerung des Messtasters und gegebenenfalls zu einer Beschädigung des Messtasters oder des Werkstücks führen können. Auch eine manuelle Verlagerung des Messtasters innerhalb des Bearbeitungsraums der Bearbeitungsmaschine in die gewünschte Ausgangskoordinate ist zeitaufwendig und setzt Erfahrung und Geschick bei dem Bediener voraus.

Wären die Formgebung und die Position des Werkstücks der Maschinensteuerung zumindest näherungsweise bekannt, könnte auch ein vollständig automatisiertes Verfahren zur Bestimmung der Referenzkoordinate des in der Bearbeitungsmaschine angeordneten Werkstücks durchgeführt werden. Allerdings setzt eine vollständig automatisierte Durchführung des Verfahrens voraus, dass die Formgebung und eine näherungsweise Positionsinformation des Werkstücks mit geeigneten Sensoreinrichtungen vorab ermittelt werden können. Der hierfür erforderliche Sensorik-Aufwand ist erheblich und führt zu zusätzlichen Kosten für die Herstellung der Bearbeitungsmaschine.

Es wird deshalb als eine Aufgabe der vorliegenden Erfindung angesehen, ein Verfahren zur Bestimmung von einer X-Y-Z-Referenzkoordinate eines in eine Bearbeitungsmaschine angeordneten Werkstücks so auszugestalten, dass mit möglichst geringem Aufwand eine möglichst zuverlässige und rasche Bestimmung der Referenzkoordinate erfolgen kann.

Diese Aufgabe wird erfindungsgemäß durch das Verfahren des Anspruchs 1 und die Bearbeitungsmaschine des Anspruchs 7 gelöst.

Dabei wird bei den Bezeichnungen durch die einzelnen oder miteinander kombinierten Präfixe X-, Y- oder Z- vor einzelnen Koordinatenangaben jeweils verdeutlicht, in welcher Raumrichtung die betreffenden Koordinaten einen definierten Wert aufweisen. So entspricht die X-Y-Anzeigekoordinate einer in zwei Dimensionen definierten Koordinate, deren Position in X-Richtung und in Y-Richtung vorgegeben ist. Die Z-Referenzkoordinate ist eine in einer Dimension definierte Koordinate, deren Position in Z-Richtung vorgegeben ist. Die beiden Raumrichtungen X und Y spannen eine Ebene auf, die der Oberfläche entspricht, auf der das Werkstück angeordnet ist - üblicherweise die Oberfläche eines Werkzeugtischs. Die Z-Richtung ist senkrecht zur X-Y-Ebene bzw. zur Oberfläche gerichtet, auf welcher das Werkstück aufliegt, so dass längs der Z-Richtung die Höhe des Werkstücks gemessen werden kann.

Ein wesentlicher Vorteil des erfindungsgemäßen Verfahrens ist die für den Benutzer sehr einfache und zuverlässig mögliche Auswahl, bzw. Vorgabe eines Zielpunkts in einer zweidimensionalen Abbildung des Werkstücks, ohne dass der Benutzer die Höhe des Werkstücks bzw. das Oberflächenprofil in dem Bereich des Zielpunkts kennen muss. Der Zielpunkt repräsentiert einen Ort oder engen Bereich auf der Oberfläche des Werkstücks, der von dem Benutzer ausgewählt wird und an dem oder von dem ausgehend die X-Y-Z-Referenzkoordinate ermittelt werden soll. Für eine korrekte

Überführung des in der Abbildung vorgegebenen Zielpunkts in eine tatsächliche Raumkoordinate innerhalb des Bearbeitungsraums in der Bearbeitungsmaschine ist die Kenntnis der Höhe des Zielpunkts bzw. des Werkstücks in dem Bereich des Zielpunkts notwendig. Diese durch eine Messung automatisiert ermittelte Höhe kann entweder bereits dem Z-Referenzwert entsprechen oder gegebenenfalls mit einer weiteren Messung automatisiert in die Z-Referenzkoordinate überführt werden. Die Z-Referenzkoordinate muss von dem Benutzer demzufolge nicht gesondert vorgegeben oder manuell ermittelt werden, sondern wird automatisiert ermittelt, so dass Fehler bei der Ermittlung der Z-Referenzkoordinate durch unzutreffende oder wenig sinnvolle Benutzereingaben ausgeschlossen sind.

Falls das Werkstück beispielsweise an definierten seitlichen Anschlägen anliegt und deshalb eine X-Y-Referenzkoordinate bereits vorgegeben und bekannt ist, kann durch die automatisierte Ermittlung der Z-Referenzkoordinate die noch fehlende Information beschafft und die X-Y-Z-Referenzkoordinate bestimmt werden. Falls die Position des Werkstücks auf dem Bearbeitungsmaschinentisch nicht ausreichend genau bekannt ist, kann in Kenntnis der Z-Referenzkoordinate eine automatisierte Ermittlung der X-Y-Z-Referenzkoordinate erfolgen.

Ausgehend von der von dem Benutzer eingegebenen X-Y-Anzeigekoordinate und der automatisiert ermittelten Z-Referenzkoordinate kann beispielsweise ebenfalls automatisiert die über die zweidimensionale Abbildung vorgegebene X-Y-Anzeigekoordinate in tatsächliche Raumkoordinaten innerhalb des Bearbeitungsraums der Bearbeitungsmaschine bzw. in die X-Y-Referenzkoordinate überführt werden, wobei die X-Y-Referenzkoordinate zusammen mit der Z-Referenzkoordinate die in dem Bearbeitungsraum definierte X-Y-Z-Referenzkoordinate ergibt. Dazu können bekannte geometrische Zusammenhänge zwischen der zweidimensionalen Abbildung des Werkstücks und der an dem Zielpunkt gemessenen Z-Referenzkoordinate verwendet und ausgewertet werden. Nachfolgend werden noch weitere Möglichkeiten beschrieben, um ausgehend von diesen Informationen mit einem automatisierten Ermittlungsverfahren die gesuchte X-Y-Z-Referenzkoordinate zu ermitteln.

Die Kameraeinrichtung kann eine kostengünstige Kamera beinhalten, die zweidimensionale Abbildungen aufnehmen kann. Da die Kameraeinrichtung nicht für Messungen verwendet wird, die für die Ermittlung der X-Y-Z-Referenzkoordinate benötigt werden und in die Ergebniswerte einfließen, sondern lediglich dem Benutzer eine Orientierung innerhalb des Bearbeitungsraums und eine geeignete Vorgabe eines Zielpunkts, bzw. der X-Y-Anzeigekoordinaten ermöglichen soll, muss die Kameraeinrichtung keinen besonders hohen Qualitätsanforderungen genügen.

Bei einer ortsfesten Anordnung der Kameraeinrichtung innerhalb der Bearbeitungsmaschine, bzw. oberhalb des Bearbeitungsraums, der sich über der Oberfläche befindet, auf welcher das Werkstück aufliegt, kann die Abbildung des Werkstücks nur aus dieser vorgegebenen Kameraposition aufgenommen werden. In Abhängigkeit von der Position der Kameraeinrichtung während der Aufnahme der Abbildung relativ zu dem Werkstück können Bereiche der Oberfläche des Werkstücks verdeckt sein oder stark verzerrt wiedergegeben werden. Bei flachen Werkstücken sind Verzerrungen oder das Risiko einer unerwünschten Verdeckung eines Bereichs des Werkstücks jedoch gering.

Es ist ebenfalls möglich, dass die Kameraeinrichtung in X-Richtung und Y-Richtung verfahrbar angeordnet sein kann, so dass der Benutzer aus verschiedenen Blickrichtungen eine Abbildung des Werkstücks aufnehmen kann. Sollten bei einer ersten Aufnahme einzelne Oberflächenbereiche des Werkstücks, die für den Benutzer von besonderem Interesse sind und sich gegebenenfalls für die Vorgabe einer X-Y-Anzeigekoordinate anbieten würden, von anderen Bereichen des Werkstücks verdeckt und deshalb nicht sichtbar sein, kann der Benutzer die Kameraeinrichtung verfahren und eine weitere, für seine Zwecke besser geeignete Abbildung des Werkstücks aufnehmen, die dann auf der Anzeigeeinrichtung angezeigt wird.

Anhand von der Abbildung des Werkstücks, die mit der Kameraeinrichtung aufgenommen und auf der Anzeigeeinrichtung angezeigt wird, kann allerdings die Z-Referenzkoordinate nicht ohne weiteres ermittelt werden. Als Beispiel , nicht Teil der Erfindung, könnte die Z-Referenzkoordinate durch eine geeignete Sensoreinrichtung ermittelt werden, beispielsweise berührungslos durch eine stereoskopische Messeinrichtung oder durch eine Ultraschall-Messeinrichtung. So könnte durch die Aufnahme von zwei Abbildungen des Werkstücks aus unterschiedlichen Blickrichtungen die Oberflächenkontur bzw. ein Höhenprofil des Werkstücks ermittelt werden, um dadurch die Z-Referenzkoordinate bestimmen und vorgeben zu können.

Erfindungsgemäss wird ein Messtaster als Messeinrichtung verwendet, mit welchem während einer Messfahrt auf das Werkstück zu der erste Kontakt des Messtasters mit dem Werkstück gemessen und in einen Koordinatenwert überführt werden kann. Der Benutzer kann Messfahrten für den Messtaster manuell vorgeben oder eine Teilautomatisierung vornehmen und beispielsweise einzelne Messfahrten aus einer vorgegebenen Auswahl von Messfahrten auswählen und jeweils automatisiert durchführen lassen: die Z-Referenzkoordinate wird durch den Messtaster automatisch ermittelt.

Zur Ermittlung der Z-Referenzkoordinate kann der Messtaster auch näherungsweise senkrecht von oben an das Werkstück herangeführt werden, bis der Messtaster die Oberfläche des Werkstücks erreicht und die Z-Referenzkoordinate entweder unmittelbar auf der Oberfläche des Werkstücks oder in einem definierten kleinen Abstand oberhalb des Werkstücks vorgegeben wird. Um eine unerwünschte Beschädigung des Messtasters während des Heranfahrens an die Oberfläche des Werkstücks zu vermeiden, muss der Messtaster mit seiner für Messfahrten vorgesehenen Messfahrtengeschwindigkeit an das Werkstück herangeführt werden. Diese Messfahrtengeschwindigkeit ist wesentlich langsamer als eine Verlagerungsgeschwindigkeit, mit welcher der Messkopf verfahren werden kann, wenn eine Kollision mit dem Werkstück ausgeschlossen ist und keine Messungen mit dem Messtaster durchgeführt werden.

Da die Formgebung und das Höhenprofil der Oberfläche des Werkstücks anhand der zweidimensionalen Abbildung des Werkstücks, die mit der Kameraeinrichtung aufgenommen wurde, nicht bekannt sind und auch nicht ohne weiteres ermittelt werden können, besteht das Risiko, dass der Messtaster während seiner Annäherung an die Z-Referenzkoordinate mit einem anderen Bereich des Werkstücks kollidiert, bevor der Messtaster den für die Ermittlung der Z-Referenzkoordinate vorgegebenen Oberflächenbereich des Werkstücks erreicht.

Der Messtaster ist zur Ermittlung der Z-Referenzkoordinate durch den von der Kameraeinrichtung erfassbaren Sichtbereich innerhalb des Bearbeitungsraums der Bearbeitungsmaschine in Richtung eines von dem Benutzer gegebenenfalls separat vorgegebenen Zielpunkts verlagert werden, bis der Messtaster das Werkstück berührt. Der je nach Umsetzung des Verfahrens zweidimensional oder dreidimensional definierte Zielpunkt kann einer fiktiven Projektion der X-Y-Anzeigekoordinate auf eine Oberfläche eines Bearbeitungstischs entsprechen, was insbesondere bei flachen Werkstücken oder bei Werkstücken mit einer geringen Oberflächenprofilierung zweckmäßig sein kann. Weiterhin kann bei einer Ausrichtung der Kameraeinrichtung im Wesentlichen senkrecht oberhalb der X-Y-Anzeigekoordinate die X-Y-Anzeigekoordinate in der Höhe der Oberfläche des Bearbeitungstischs als geeigneter Zielpunkt übernommen werden.

Erfindungsgemäss ist vorgesehen, dass zur Ermittlung der X-Y-Z-Referenzkoordinate ausgehend von der automatisiert ermittelten Z-Referenzkoordinate und der von dem Benutzer eingegebenen X-Y-Anzeigekoordinate zunächst eine X-Y-Z-Ausgangskoordinate berechnet wird, und dass eine Messeinrichtung der Bearbeitungsmaschine automatisiert an die X-Y-Z-Ausgangskoordinate verlagert wird, und wobei anschließend die X-Y-Z-Referenzkoordinate ausgehend von der jetzt vorgegebenen Position der Messeinrichtung durch ein geeignetes, üblicherweise automatisiert ablaufendes Ermittlungsverfahren mit der Messeinrichtung bestimmt wird. In Kenntnis der Z-Referenzkoordinate kann die von dem Benutzer auf der Anzeigeeinrichtung ausgewählte X-Y-Anzeigekoordinate in eine X-Y-Ausgangskoordinate umgerechnet werden. Die Z-Referenzkoordinate kann ebenfalls in eine Z-Ausgangskoordinate überführt werden, wobei in vielen Fällen die Z-Ausgangskoordinate der Z-Referenzkoordinate zuzüglich einer vorgebbaren Sicherheitsabstandshöhe entspricht, so dass sich die Messeinrichtung nach dem Verfahren in die X-Y-Z-Ausgangskoordinate an der von dem Benutzer ausgewählten X-Y-Position etwas oberhalb von dem Werkstück befindet. In Kenntnis der X-Y-Z-Ausgangskoordinate kann anschließend mit einem ebenfalls automatisiert ablaufenden

Ermittlungsverfahren die Bestimmung der Referenzkoordinate des Werkstücks begonnen und durchgeführt werden. Der Benutzer muss folglich lediglich auf der Anzeigeeinrichtung eine X-Y-Anzeigekoordinate in der Abbildungsebene auswählen, ohne dass dem Benutzer dabei bereits die tatsächliche X-Y-Z-Ausgangskoordinate in dem Bearbeitungsraum der Bearbeitungsmaschine bekannt ist, an welche anschließend die Messeinrichtung verfahren wird. Der Benutzer kann die X-Y-Anzeigekoordinate intuitiv auswählen und vorgeben, ohne dass Bedienfehler bei der Eingabe der X-Y-Anzeigekoordinate auftreten können.

Es ist ebenfalls möglich, dass der Zielpunkt, der für die Ermittlung der Z-Referenzkoordinate benötigt wird, unabhängig von der X-Y-Anzeigekoordinate durch den Benutzer ausgehend von der angezeigten Abbildung des Werkstücks separat als eine zweite X-Y-Anzeigekoordinate vorgegeben wird. Auf diese Weise kann die erste X-Y-Anzeigekoordinate beispielsweise in der unmittelbaren Nähe einer Ecke des Werkstücks vorgegeben werden, die für die Ermittlung der X-Y-Z-Referenzkoordinate vermessen werden soll, während der Zielpunkt für die Ermittlung der Z-Referenzkoordinate oder zumindest der Z-Ausgangskoordinate jedoch beabstandet hierzu in einem auf der Abbildung sichtbaren Oberflächenbereich des Werkstücks vorgegeben wird, der für die Ermittlung der Z-Referenzkoordinate besser geeignet ist und beispielsweise gefahrlos durch den Messtaster angefahren werden kann.

Der Zielpunkt kann auch anhand der von dem Benutzer eingegebenen X-Y-Anzeigekoordinate und einer zusätzlichen Höhenangabe als derjenige Zielpunkt ermittelt werden, der bei einer fiktiven Projektion der auf der Anzeigeeinrichtung angezeigten Abbildung des Werkstücks auf eine Oberfläche eines Bearbeitungstisches, auf welcher das Werkstück aufliegt, dem Schnittpunkt eines von der Kameraeinrichtung zu der fiktiven Projektion verlaufenden Sichtstrahls mit einer waagrecht in der von dem Benutzer eingegebenen Höhe verlaufenden Höhenschnittebene entspricht. Der Benutzer kann die Höhe des Werkstücks beispielsweise bei einem bekannten Werkstück aus einer Datenbank abrufen, vorab ausmessen oder näherungsweise abschätzen.

Die Verlagerung des Messtasters kann dabei beispielsweise durch geeignete zusätzliche Benutzereingaben so vorgegeben werden, dass eine Kollision des Messtasters mit dem Werkstück nach Möglichkeit vermieden werden kann, obwohl dessen Kontur und Oberflächenprofilierung anhand der Abbildung des Werkstücks auf der Anzeigevorrichtung noch nicht genau bekannt ist. Zu diesem Zweck kann beispielsweise bei einer senkrecht oberhalb des Zielpunkts aufgenommenen Abbildung des Werkstücks der Messtaster an die Position der Kameraeinrichtung verfahren werden und anschließend ausschließlich entlang der Z-Richtung verfahren werden, um senkrecht von oben auf den Zielpunkt zu zu fahren. Der Benutzer könnte auch beispielsweise einen für den Messtaster verbotenen Bereich des Bearbeitungsbereichs definieren, der anschließend von dem Messtaster nicht durchfahren werden darf, sondern umfahren werden muss.

Um in einfacher Weise eine unerwünschte Kollision ohne zusätzliche Benutzereingaben vermeiden zu können ist gemäß einer besonders vorteilhaften Ausgestaltung des Erfindungsgedankens vorgesehen, dass der Messtaster oder die verwendete Messeinrichtung längs eines Sichtstrahls ausgehend von der Kameraeinrichtung zu dem Zielpunkt verlagert wird. Der Sichtstrahl verläuft dabei längs eines fiktiven und von dem Zielpunkt ausgehenden Lichtstrahl, der durch eine Kameraoptik bis zur Abbildungsebene in der Kameraeinrichtung verläuft und dort auf einem dem Koordinatenzielpunkt zugeordneten Bereich der Abbildungsebene mit einer bildgebenden Information auftrifft. Der Sichtstrahl kann vereinfachend auch als eine gerade Verbindungslinie von dem Zielpunkt bis zu einem Fokuspunkt der Kameraeinrichtung angenommen werden.

Da der Zielpunkt, der von dem Benutzer über die angezeigte Abbildung des Werkstücks vorgegeben wurde, auf der mit der Kameraeinrichtung aufgenommenen Abbildung des Werkstücks sichtbar ist, kann der Zielpunkt längs des Sichtstrahls, der sich von der Kameraeinrichtung bis zu dem Zielpunkt auf der Oberfläche des Werkstücks erstreckt, nicht von Ausformungen oder vorspringenden Bereichen des Werkstücks verdeckt sein. Der Messtaster wird bei einer Verlagerung entlang des Sichtstrahls unabhängig von der Höhe der Oberfläche des Werkstücks in demjenigen durch den Zielpunkt vorgegebenen Oberflächenbereich auf die Oberfläche des Werkstücks auftreffen, der bei der mit der Anzeigevorrichtung angezeigten Aufnahme des Werkstücks dem von dem Benutzer durch die X-Y-Anzeigekoordinate oder durch den gesondert vorgegebene Koordinatenzielpunkt ausgewählten Oberflächenbereich entspricht.

Alle in der auf der Anzeigeeinrichtung angezeigten Abbildung des Werkstücks sichtbaren Oberflächenbereiche können von dem Messtaster entlang des von der Kameraeinrichtung zu dem betreffenden Oberflächenbereich verlaufenden Sichtstrahls gefahrlos angefahren werden. Falls der gewünschte Zielpunkt auf der Oberfläche des Werkstücks nicht sichtbar ist oder nicht in einfacher Weise ausgewählt und vorgegeben werden kann, kann es zweckmäßig sein, eine weitere Abbildung des Werkstücks aus einer anderen Position der Kameraeinrichtung aufzunehmen, um durch den veränderten Blickwinkel beispielsweise zunächst verdeckte Bereiche sichtbar werden zu lassen, in denen dann die X-Y-Anzeigekoordinate und ein gegebenenfalls abweichender Zielpunkt für die Ermittlung der Z-Referenzkoordinate vorgegeben werden können.

Als Beispiel, nicht Teil der Erfindung, ist es selbstverständlich ebenfalls möglich, dass die Z-Referenzkoordinate durch eine geeignete Sensoreinrichtung ermittelt wird, ohne dass der Messtaster durch den Bearbeitungsraum der Bearbeitungsmaschine bis an eine Oberfläche des Werkstücks verfahren werden muss. Sofern die Bearbeitungsmaschine bereits aus anderen Gründen bzw. für andere Verwendungszwecke eine geeignete Sensoreinrichtung aufweist, kann diese Sensoreinrichtung genutzt und das Verfahren bis zur Ermittlung der X-Y-Z-Ausgangskoordinate beschleunigt werden. Anschließend kann die für die Ermittlung der X-Y-Z-Referenzkoordinate verwendete Messeinrichtung an die bereits ermittelte und jetzt bekannte X-Y-Z-Ausgangskoordinate verfahren werden, um dann mit der Messeinrichtung ausgehend von der X-Y-Z-Ausgangskoordinate ein automatisiertes Ermittlungsverfahren zur Bestimmung der X-Y-Z-Referenzkoordinate durchzuführen. Auch in diesem Fall ist es jedoch vorteilhaft, wenn die Messeinrichtung, bzw. gegebenenfalls der Messtaster vor Beginn des Ermittlungsverfahrens bzw. der notwendigen Messungen oder Messfahrten für die Ermittlung der X-Y-Z-Referenzkoordinate entlang eines Sichtstrahls zu der X-Y-Z-Ausgangskoordinate verfahren wird, da auf diesem Verfahrweg eine Kollision mit benachbarten Bereichen des Werkstücks ausgeschlossen werden kann. Eine Ermittlung eines anderen Verfahrwegs, der in Kenntnis der mit der Sensoreinrichtung ermittelten dreidimensionalen Formgebung des Werkstücks ebenfalls kollisionsfrei vorgegeben werden kann, ist möglich, jedoch nicht notwendig.

Eine besonders einfache und intuitive Eingabe der X-Y-Anzeigekoordinate wird erfindungsgemäß dadurch ermöglicht, dass zur Auswahl der X-Y-Anzeigekoordinate auf der angezeigten Abbildung ein von einem Benutzer eingegebenes grafisches Eingabeobjekt automatisiert in ein X-Y-Auswahlobjekt überführt und das X-Y-Auswahlobjekt die angezeigte Abbildung des Werkstücks überlagernd auf der Anzeigeeinrichtung angezeigt wird. Das grafische Eingabeobjekt kann beispielsweise ein grafisches Symbol sein, dass mit Hilfe einer Eingabeeinrichtung wie beispielsweise einer Computer-Maus oder eines Trackballs auf der angezeigten Abbildung in eine überlagerte Symbolanzeige überführt und dargestellt wird. Die überlagerte Symbolanzeige kann von dem Benutzer nach Belieben verschoben werden, bis der Benutzer eine endgültige Position des Symbols und damit einhergehend eine Auswahl der X-Y-Anzeigekoordinate vorgibt.

Bei Verwendung einer berührungssensitiven Anzeigeeinrichtung, beispielsweise eines Touch-Displays, kann der Benutzer das Eingabeobjekt auch über eine Gestenerkennung direkt über die Anzeigeeinrichtung mit der dort angezeigten Abbildung des Werkstücks eingeben. Die von dem Benutzer durchgeführte Geste, beispielsweise ein mit einem Finger eingegebener Linienverlauf, kann anschließend ausgewertet und einer vorab definierten Kategorie zugeordnet werden, um anschließend an Stelle des durch den Benutzer eingegebenen Linienverlaufs das dieser Kategorie zugeordnete X-Y-Auswahlobjekt anzeigen zu können.

Das X-Y-Auswahlobjekt kann in Abhängigkeit von der Art der Referenzkoordinate oder in Abhängigkeit von dem gewählten Ermittlungsverfahren für die Referenzkoordinate eine unterschiedlich gestaltete grafische Darstellung aufweisen. Dem Benutzer können dadurch weitere Informationen grafisch und intuitiv erfassbar mitgeteilt werden.

Es ist ebenfalls möglich und in vielen Fällen besonders vorteilhaft, dass der Benutzer über das X-Y-Auswahlobjekt weitere Parameter für das automatisiert ablaufende Ermittlungsverfahren der Referenzkoordinaten des Werkstücks eingeben kann. Die grafische Darstellung des X-Y-Auswahlobjekts kann dabei eine für den Benutzer intuitiv und ohne Schwierigkeiten erkennbare grafische Repräsentation der einzelnen Koordinateninformationen und Parameterinformationen beinhalten. Zudem können von dem Benutzer über das X-Y-Auswahlobjekt eingegebene Veränderungen einzelner Parameter sehr anschaulich grafisch dargestellt und visualisiert werden, so dass fehlerhafte Eingaben des Benutzers deutlich auffallen müssen und nahezu ausgeschlossen werden können.

Die Erfindung betrifft auch eine Bearbeitungsmaschine für die Bearbeitung eines Werkstücks, mit welcher das vorangehend beschriebene erfindungsgemäße Verfahren durchgeführt werden kann. Die Bearbeitungsmaschine weist zu diesem Zweck eine verfahrbare Messeinrichtung, welche ein Messtaster ist, und eine Steuerungseinrichtung auf, wobei mit der Messeinrichtung in einem gegebenenfalls automatisiert ablaufenden Ermittlungsverfahren eine X-Y-Z-Referenzkoordinate des für die Bearbeitung vorgesehenen Werkstücks ermittelt werden kann. Die Bearbeitungsmaschine weist zudem eine Bedieneinrichtung zur Eingabe von Steuerungsbefehlen durch einen Benutzer auf, wobei die Bedieneinrichtung eine grafische Anzeigeeinrichtung zur Anzeige von Benutzereingaben beinhaltet. Die Bearbeitungsmaschine weist weiterhin eine Kameraeinrichtung auf, mit welcher eine Aufnahme des in der Bearbeitungsmaschine angeordneten Werkstücks erstellt und anschließend auf der Anzeigeeinrichtung angezeigt werden kann. Die Bearbeitungsmaschine ist erfindungsgemäß so eingerichtet, dass ein ebenfalls erfindungsgemäßes und vorangehend beschriebenes Verfahren durchgeführt werden kann.

Die Kameraeinrichtung ist dabei zweckmäßigerweise relativ zu dem Werkstück zumindest in X-Richtung und in Y-Richtung verfahrbar. Zu diesem Zweck kann entweder die Kameraeinrichtung in X-Richtung und in Y-Richtung verfahrbar sein, oder bei einer ortsfest angeordneten Kameraeinrichtung das Werkstück zusammen mit einem Bearbeitungstisch, auf dem das Werkstück aufliegt, in X-Richtung und in Y-Richtung verfahrbar sein. Es ist ebenfalls denkbar und für viele Bearbeitungsmaschinen zweckmäßig, dass die Kameraeinrichtung parallel zu der Oberfläche des Bearbeitungstischs in einer Richtung, beispielsweise in der X-Richtung verfahrbar ist, und das Werkstück zusammen mit dem Bearbeitungstisch in einer anderen, hierzu senkrechten und beispielsweise in der Y-Richtung verfahrbar ist.

Die Kameraeinrichtung kann unmittelbar neben der Messeinrichtung angeordnet sein, die zweckmäßigerweise nahezu beliebig in einem Bearbeitungsraum der Bearbeitungsmaschine verfahrbar sein sollte.

Gemäß einer vorteilhaften Ausgestaltung des Erfindungsgedankens ist vorgesehen, dass die Kameraeinrichtung und die Messeinrichtung an einem Bearbeitungskopf der Bearbeitungsmaschine angeordnet sind. Der Bearbeitungskopf kann seinerseits an einer Z-Achse gelagert sein, also in Z-Richtung verfahrbar sein.

Eine kostengünstige und zuverlässig verwendbare Messeinrichtung ist ein Messtaster, der bei einer Berührung eines Tastkopfs mit einem Objekt, beispielsweise dem Werkstück, ein auswertbares Messsignal erzeugt.

Es ist für eine möglichst einfache, fehlerfreie und rasche Benutzereingabe vorteilhaft, dass die Anzeigeeinrichtung ein berührungssensitives grafisches Display aufweist, so dass ein Benutzer durch Berühren des grafischen Displays ein grafisches Eingabeobjekt zur Vorgabe der X-Y-Anzeigekoordinaten eingeben kann. Weiterhin kann der Benutzer mit einem berührungssensitiven grafischen Display auch in besonders einfacher Weise das grafisch dargestellte X-Y-Auswahlobjekt modifizieren und sowohl die X-Y-Z-Ausgangskoordinate anpassen als auch einzelne Parameter für die Ermittlung der Referenzkoordinate vorgeben.

Die Anzeigeeinrichtung kann dabei auch ein nicht mechanisch oder zumindest nicht dauerhaft mechanisch mit einem Gehäuse der Bearbeitungsmaschine verbundenes Anzeigegerät sein, beispielsweise ein Mobilfunkgerät oder ein elektronisches Tablet.

Es ist weiterhin möglich, das erfindungsgemäße Verfahren auf herkömmlichen, beziehungsweise bereits mit herkömmlichen Bearbeitungsverfahren genutzten Bearbeitungsmaschinen durchzuführen. Zu diesem Zweck müssen lediglich die notwendigen und noch fehlenden Komponenten der Bearbeitungsmaschine wie beispielsweise eine Kameraeinrichtung, eine grafische Anzeigeeinrichtung, ein Softwaremodul zur Durchführung des erfindungsgemäßen Verfahrens und eine Schnittstelleneinrichtung zur Überführung der einzelnen Werte und Befehle in das Steuerungsprogramm der Bearbeitungsmaschine nachgerüstet werden. Gemäß einer vorteilhaften Ausgestaltung des Erfindungsgedankens ist dann vorgesehen, dass die von dem Benutzer über das X-Y-Auswahlobjekt vorgegeben Parameter und gegebenenfalls weitere Parameter für das automatisiert ablaufende Ermittlungsverfahren in Maschinenparameter überführt werden, die über die Schnittstelleneinrichtung an eine Steuerungseinrichtung der Bearbeitungsmaschine übermittelt werden.

Nachfolgend werden exemplarische Ausführungsbeispiele des Erfindungsgedankens näher erläutert, die in der Zeichnung dargestellt sind. Es zeigt:
Fig. 1 eine schematische Abbildung einer Abbildung eines in einer Bearbeitungsmaschine angeordneten Werkstücks, die mit einer Kameraeinrichtung der Bearbeitungsmaschine aufgenommenen wurde, zusammen mit der Anordnung des Werkstücks und der Kameraeinrichtung in der Bearbeitungsmaschine,
Fig. 2 eine schematische Abbildung gemäß Fig. 1, wobei die Abbildung des Werkstücks aus einem anderen Blickwinkel der Kameraeinrichtung heraus aufgenommen ist,
Fig. 3 eine schematische Abbildung zur Verdeutlichung des Einflusses der Höhe einer Oberfläche des Werkstücks auf die Koordinatenwerte,
Fig. 4a bis 4c mehrere schematische Abbildungen der Anzeige einer Abbildung des Werkstücks, die jeweils mit einem von dem Benutzer eingegebenen grafischen Eingabeobjekt bzw. mit einem X-Y-Auswahlobjekt überlagert wird, und
Fig. 5a bis 5c mehrere schematische Abbildungen der Anzeige einer Abbildung des Werkstücks, die jeweils mit einem anderen von dem Benutzer eingegebenen grafischen Eingabeobjekt, bzw. mit einem anderen X-Y-Auswahlobjekt überlagert wird.

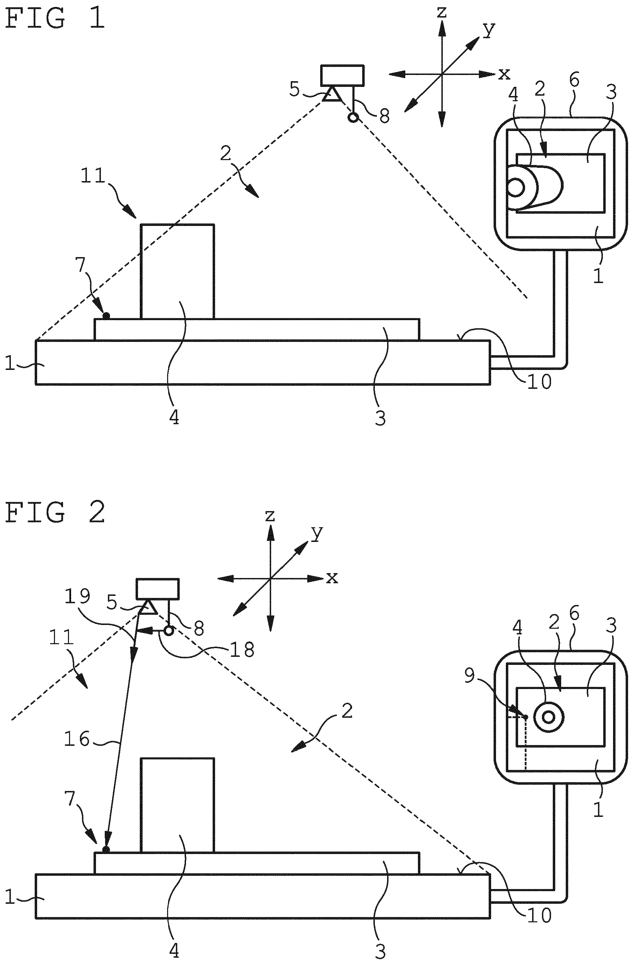

In den Fig. 1 bis 3 ist jeweils ein Bearbeitungstisch 1 einer nicht näher dargestellten Bearbeitungsmaschine dargestellt. Auf dem Bearbeitungstisch 1 ist ein Werkstück 2 angeordnet, das in einem nachfolgenden Bearbeitungsschritt bearbeitet werden soll. Das Werkstück 2 weist beispielhaft ein plattenförmiges Grundelement 3 und eine nach oben vorspringende hohlzylindrische Ausformung 4 auf. Da die Position des Werkstücks 2 auf dem Bearbeitungstisch 1 nicht ausreichend genau bekannt ist oder nicht ausreichend genau vorgegeben werden kann, soll eine Referenzkoordinate ermittelt werden, die eine genaue Positionsinformation des Werkstücks 2 auf dem Bearbeitungstisch 1 ermöglicht.

Mit einer an einem Bearbeitungskopf angeordneten und in alle Raumrichtungen relativ zu dem Werkstück 2 verfahrbaren Kameraeinrichtung 5 wird eine erste Abbildung des Werkstücks 2 aufgenommen und auf einer Anzeigeeinrichtung 6 zur Anzeige gebracht (Fig. 1). Durch den schrägen Blickwinkel, den die Kameraeinrichtung 5 relativ zu der Ausrichtung der hohlzylindrischen Ausformung 4 des Werkstücks 2 aufweist, verdeckt die hohlzylindrische Ausformung 4 des Werkstücks 2 benachbarte Bereiche des plattenförmigen Grundelements 3, die deshalb auf der Abbildung der Aufnahme, die auf der Anzeigeeinrichtung 6 angezeigt wird, nicht sichtbar sind.

Es ist für eine in alle Richtungen mögliche Veränderung der Position der Kameraeinrichtung 5 relativ zu dem Werkstück 2 ebenfalls denkbar, dass die Kameraeinrichtung 5 nur in einer Richtung parallel zu dem Bearbeitungstisch 1 verfahrbar ist, und der Bearbeitungstisch 1 in einer quer dazu verlaufenden Richtung relativ zu der Kameraeinrichtung 5 beispielsweise auf einem Schlitten verlagert werden kann.

Ausgehend von einer letztendlich durch den Benutzer vorgegebenen X-Y-Z-Ausgangskoordinate 7 kann mit einem Messtaster 8 durch mehrere Messfahrten die nachfolgende Ermittlung einer X-Y-Z-Referenzkoordinate für das Werkstück 2 durchgeführt werden. Der Messtaster 8 ist in unmittelbarer Nähe zu der Kameraeinrichtung 5 ebenfalls an dem Bearbeitungskopf gelagert. Um die X-Y-Z-Ausgangskoordinate 7 vorzugeben kann der Benutzer auf der Anzeigeeinrichtung 6 eine X-Y-Anzeigekoordinate 9 auswählen, von der ausgehend zunächst die Bestimmung der X-Y-Z-Ausgangskoordinate 7 erfolgen soll. Es kann vorkommen, dass die von dem Benutzer aus verschiedenen Gründen angestrebte X-Y-Anzeigekoordinate 7 jedoch - wie bei dem exemplarisch beschriebenen Ausführungsbeispiel - nicht in dem sichtbaren Bereich des plattenförmigen Grundelements 3 des Werkstücks 2 liegt bzw. von der hohlzylindrischen Ausformung 4 verdeckt ist. In diesem Fall kann die Kameraeinrichtung 5 horizontal verlagert und eine zweite Abbildung des Werkstücks 2 unter einem anderen Blickwinkel aufgenommen werden, so dass die für den Benutzer besonders interessanten Bereiche des plattenförmigen Grundelements 3 auf der neu aufgenommenen Abbildung sichtbar sind (Fig. 2). Der Benutzer kann dann auf der Anzeigeeinrichtung 6 die von Ihm gewünschte X-Y-Anzeigekoordinate 9 auswählen, von der ausgehend die Bestimmung der X-Y-Z-Ausgangskoordinate 7 erfolgen soll.

Die auf der Anzeigeeinrichtung 6 visualisierte Abbildung des Werkstücks 2 enthält keine Informationen über die in Z-Richtung gemessene Höhe der auf dieser Abbildung sichtbaren Oberflächenbereiche des Werkstücks 2, wobei die Höhe als Abstand über einer Oberfläche 10 des Bearbeitungstischs 1 definiert ist. In Abhängigkeit von der Blickrichtung und der jeweiligen Höhe der sichtbaren Oberflächenbereiche des Werkstücks 2 entspricht die von dem Benutzer auf der Anzeigeeinrichtung 6 ausgewählte X-Y-Anzeigekoordinate 9 unterschiedlichen tatsächlichen Raumkoordinaten x, y, z innerhalb des Bearbeitungsraums 11 der Bearbeitungsmaschine, der über dem Bearbeitungstisch 1 zur Verfügung steht.

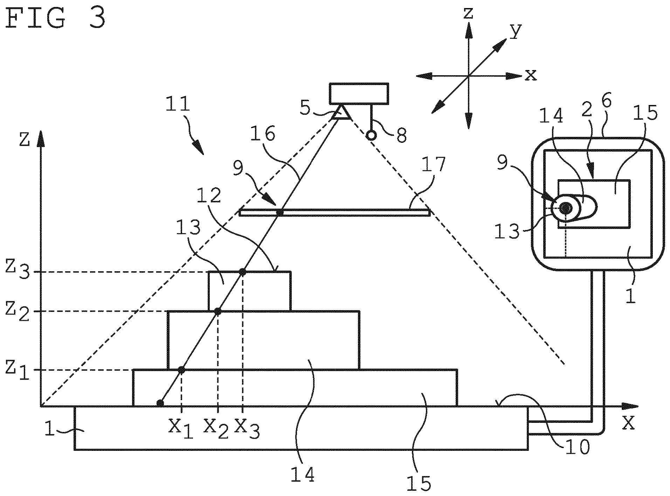

In Fig. 3 ist exemplarisch und schematisch dargestellt, welchen Einfluss die Höhe (in Z-Richtung als Abstand zu der Oberfläche 10 des Bearbeitungstischs 1 gemessen) eines sichtbaren Oberflächenbereichs des Werkstücks 2 auf die tatsächlichen Raumkoordinaten der X-Y-Z-Ausgangskoordinate 7 aufweist. Für die von dem Benutzer auf der Anzeigeeinrichtung 6 ausgewählte X-Y-Anzeigekoordinate 9 ergibt sich auf der eine Höhe z₃ aufweisenden Oberseite 12 einer zylindrischen Ausformung 13 eine Raumkoordinate x₃ innerhalb des Bearbeitungsraums 11. Würde das Werkstück 2 nicht die zylindrische Ausformung 13 aufweisen, sondern lediglich eine elliptische Ausformung 14 mit der Höhe z₂, so wäre die ausgewählte X-Y-Anzeigekoordinate 9 einer X-Y-Z-Ausgangskoordinate 7 mit der Höhe z₂ und der Raumkoordinate x₂ zugeordnet. Würde das Werkstück 2 auch die elliptische Ausformung 14 mit der Höhe z₂ nicht aufweisen, sondern lediglich ein plattenförmiges Grundelement 15 mit der Höhe z₁, würde die der X-Y-Anzeigekoordinate 9 zugeordnete X-Y-Z-Ausgangskoordinate 7 eine Raumkoordinate x₁ aufweisen. Um ausgehend von der X-Y-Anzeigekoordinate 9, die der Benutzer auf der Anzeigeeinrichtung 6 ausgehend von der dort angezeigten Abbildung des Werkstücks 2 vorgibt, die Raumkoordinaten der X-Y-Z-Ausgangskoordinate 7 zu bestimmen, an die der Messtaster 8 vor Beginn der für die Ermittlung der X-Y-Z-Referenzkoordinate erforderlichen Messfahrten verlagert werden soll, muss die Höhe z des von dem Benutzer ausgewählten Oberflächenbereichs des Werkstücks 2 bestimmt werden.

Es ist grundsätzlich möglich, die Höhe z der Oberfläche des Werkstücks 2 mit gesonderten Sensoreinrichtungen zu ermitteln oder anhand einer Werkstück-Datenbank oder eines Schätzwerts vorzugeben. Der Messtaster 8 kann weiterhin auch manuell zu der gewünschten X-Y-Z-Ausgangskoordinate verfahren werden.

Bei dem erfindungsgemäßen Verfahren wird der Messtaster 8 entlang eines Sichtstrahls 16 zu dem Werkstück 2 hin verfahren, wobei eine Annäherung und Berührung der Oberfläche des Werkstücks 2 von dem Messtaster 8 registriert und in die gesuchte Z-Referenzkoordinate überführt wird. Der Sichtstrahl 16 verläuft in Blickrichtung von der Kameraeinrichtung 5 durch die X-Y-Anzeigekoordinate 9 der in einer virtuellen Abbildungsebene 17 angeordneten Abbildung des Werkstücks 2 und bildet eine gerade Verbindungslinie von der Kameraeinrichtung 5 bis zu dem durch die X-Y-Anzeigekoordinate 9 definierten Oberflächenbereich des Werkstücks 2.

Bei dem in Fig. 2 exemplarisch dargestellten Ausführungsbeispiel entspricht die von dem Benutzer ausgewählte X-Y-Anzeigekoordinate 9 auch einem Zielpunkt, der für die Ermittlung der Z-Referenzkoordinate verwendet wird. Da auf der zweiten Abbildung gemäß Fig. 2, die auf der Anzeigeeinrichtung 6 angezeigt wird, die X-Y-Anzeigekoordinate 9 sichtbar ist und nicht von angrenzenden Bereichen des Werkstücks 2, insbesondere nicht von der hohlzylindrischen Ausformung 4 verdeckt ist, kann der Messtaster 8 gefahrlos auf dem Sichtstrahl 16 eine Messfahrt bis zu dem Oberflächenbereich des Werkstücks 2 durchführen, der durch die von dem Benutzer vorgegebene X-Y-Anzeigekoordinate 9 vorgegeben wurde, und durch einen Kontakt mit der Oberfläche des Werkstücks 2 die gesuchte Z-Referenzkoordinate ermitteln. In Kenntnis der Z-Referenzkoordinate kann dann die vollständige X-Y-Z-Referenzkoordinate ermittelt werden.

In Fig. 2 ist beispielhaft der entsprechende Verfahrweg des Messtasters 8 dargestellt. Zunächst wird der Messtaster 8 über einen Initialisierungswegabschnitt 18 in einem ausreichenden Abstand zu dem Werkstück 2, beispielsweise in Höhe der Kameraeinrichtung 5, an den berechneten Sichtstrahl 16 herangeführt. Anschließend erfolgt eine Messfahrt 19 entlang des Sichtstrahls 16, bis der Messtaster 8 auf die Oberfläche des Werkstücks 2 auftrifft.

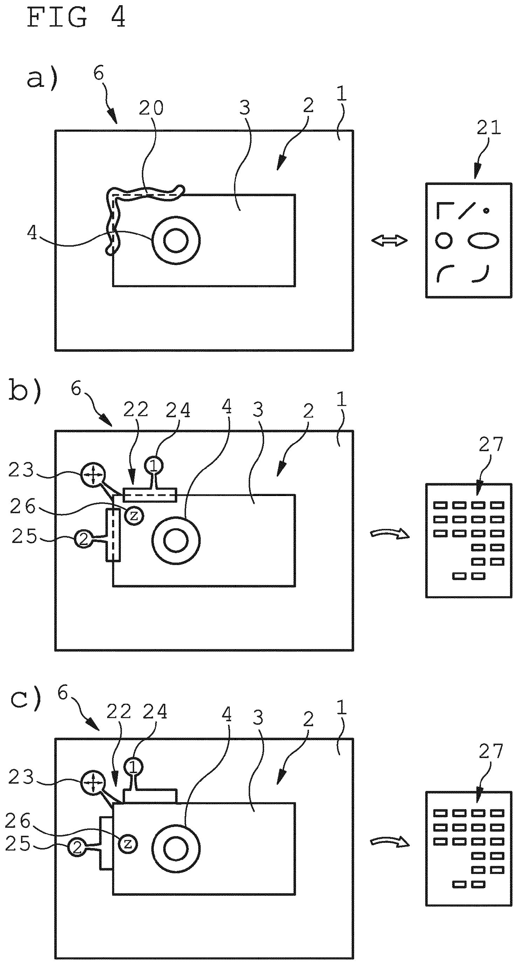

In den Fig. 4a bis 4c sind exemplarisch und schematisch verschiedene Schritte einer grafischen und interaktiven Benutzereingabe aller notwendigen Informationen für die anschließende automatisierte Bestimmung der Referenzkoordinate des Werkstücks 2 dargestellt.

Die mit der Kameraeinrichtung 5 aufgenommene Abbildung des Werkstücks 2 wird auf einer berührungssensitiven Anzeigeeinrichtung 6 angezeigt. Der Benutzer kann mit dem Finger eine Geste ausführen und dadurch ein grafisches Eingabeobjekt 20 in Form eines Linienverlaufs eingeben. Das grafische Eingabeobjekt 20 wird die Abbildung des Werkstücks 2 überlagernd auf der Anzeigeeinrichtung 6 angezeigt. Das grafische Eingabeobjekt 20 wird durch Vergleich mit in einer Speichereinrichtung 21 hinterlegten Linienverläufen einer Kategorie zugeordnet. Im vorliegenden Beispielfall soll eine rechtwinklige Ecke des Werkstücks 2 für die Bestimmung der Referenzkoordinate des Werkstücks 2 vermessen werden (Fig. 4a).

Das kategorisierte grafische Eingabeobjekt 20 wird in ein X-Y-Auswahlobjekt 22 überführt und das X-Y-Auswahlobjekt 22 an Stelle des grafischen Eingabeobjekts 20 auf der Anzeigeeinrichtung 6 angezeigt, wobei ebenfalls die angezeigte Abbildung des Werkstücks 2 überlagert wird und für den Benutzer weiterhin sichtbar bleibt (Fig. 4b und 4c) .

Das X-Y-Auswahlobjekt 22 zeigt dem Benutzer verschiedene Informationen im Zusammenhang mit den geplanten nachfolgenden Messfahrten des Messtasters 8 zur automatisierten Ermittlung der Referenzkoordinate an. Weiterhin bietet das X-Y-Auswahlobjekt 22 dem Benutzer verschiedene Möglichkeiten an, durch weitere grafische Eingaben, beispielsweise Gesten, über die berührungssensitive Anzeigeeinrichtung 6 einzelne Vorgaben oder Parameter für die nachfolgenden Messfahrten zu verändern und anzupassen. Die Position des X-Y-Auswahlobjekts 22 kann durch Ergreifen und Verschieben eines grafisch dargestellten Objektankers 23 verändert werden. Eine Startposition für die beiden vorgesehenen Messfahrten, deren Länge und Richtung relativ zu dem Werkstück 2 können über grafisch dargestellte Messfahrtanker 24, 25 verändert werden. Zusätzlich kann der Benutzer einen Zielpunkt 26 für die Ermittlung der Z-Referenzkoordinate weitgehend unabhängig von der Anordnung des X-Y-Auswahlobjekts 22 vorgeben. Sobald die Eingabe des Benutzers abgeschlossen wird, kann zunächst die Z-Referenzkoordinate und anschließend die X-Y-Z-Ausgangskoordinate ermittelt werden, um danach in einem automatisiert ablaufenden Ermittlungsverfahren die gesuchte X-Y-Z-Referenzkoordinate des Werkstücks 2 zu bestimmen.

Falls sich das Werkstück 2 beispielsweise über seitliche Anschläge oder gesonderte Klemmmittel in einer vorgegebenen und genau bekannten Position in X-Richtung und in Y-Richtung auf dem Bearbeitungstisch 11 befindet, kann es für die Referenzierung des Werkstücks ausreichen, mit dem vorausgehend beschriebenen Verfahren die Z-Referenzkoordinate zu bestimmen.

Die über das grafische Eingabeobjekt 20 und anschließend über das X-Y-Auswahlobjekt 22 grafisch und interaktiv erfassten Benutzervorgaben können bei Bedarf in Maschinenparameter 27 umgerechnet und ebenfalls angezeigt werden. Mit einer Schnittstelleneinrichtung können die Maschinenparameter 27 an eine Steuerungseinrichtung der Bearbeitungsmaschine übermittelt werden, um anschließend das Ermittlungsverfahren für die Z-Referenzkoordinate oder die X-Y-Z-Referenzkoordinate des Werkstücks 2 mit einer Messfahrt oder mit mehreren Messfahrten des Messtasters 8 durchzuführen. In den Fig. 4b und 4c sind exemplarisch jeweils tabellarisch angeordnete Wertefelder dargestellt, die bei herkömmlichen Verfahren von einem Benutzer mit den entsprechenden Maschinenparametern 27 für die X-Y-Z-Ausgangskoordinaten 7 und die einzelnen Messfahrten des Messtasters 8 manuell befüllt werden müssen, bevor das Ermittlungsverfahren zur Bestimmung der Referenzkoordinate des Werkstücks 2 mit den einzelnen Messfahrten des Messtasters 8 durchgeführt werden kann. Im Vergleich mit der fehleranfälligen und auch für geübte und sorgfältige Benutzer zeitaufwendigen manuellen Eingabe der Maschinenparameter 27 können mit dem erfindungsgemäßen Verfahren die erforderlichen Vorgaben des Benutzers in einfacher Weise grafisch, intuitiv und interaktiv vorgegeben werden, wobei fehlerhafte Vorgaben leicht erkannt und dadurch vermieden werden können.

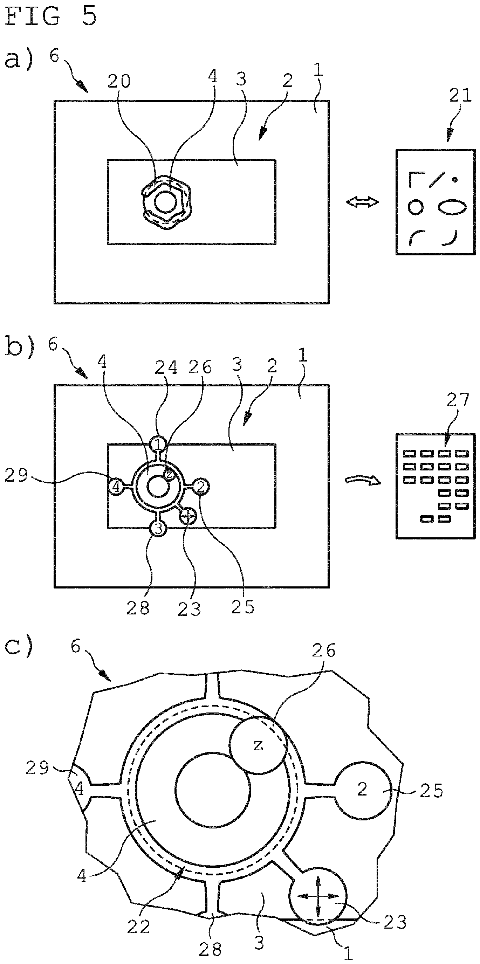

In den Fig. 5a bis 5c ist exemplarisch die Möglichkeit dargestellt, dass der Benutzer für dasselbe Werkstück 2 eine abweichende Referenzierung durchführen lässt. Zu diesem Zweck führt der Benutzer eine andere Geste aus und erzeugt das grafische Eingabeobjekt 20 über der hohlzylindrischen Ausformung 4 mit einer anderen Linienführung, die näherungsweise kreisförmig ist und ebenfalls näherungsweise an die sichtbaren Abmessungen der hohlzylindrischen Ausformung 4 angepasst ist (Fig. 5a).

Das grafische Eingabeobjekt 20 wird durch Mustervergleich mit den vorab in der Speichereinrichtung 21 definierten Kategorien in das ebenfalls kreisförmige X-Y-Auswahlobjekt überführt, das anschließend an Stelle des grafischen Eingabeobjekts 20 auf der Anzeigeeinrichtung 6 angezeigt wird, wobei durch die Überlagerung das Werkstück 2 und insbesondere die hohlzylindrische Ausformung 4 weiterhin erkennbar ist (Fig. 5b). Das X-Y-Auswahlobjekt 22 zeigt dem Benutzer die verschiedenen Informationen im Zusammenhang mit den geplanten nachfolgenden Messfahrten des Messtasters 8 zur automatisierten Ermittlung der Referenzkoordinate an, die von dem Benutzer auch über das X-Y-Auswahlobjekt 22 beeinflusst und verändert werden können. Die Position des X-Y-Auswahlobjekts 22 kann durch Ergreifen und Verschieben des grafisch dargestellten Objektankers 23 verändert werden. Eine Startposition für die nunmehr vier vorgesehenen Messfahrten sowie deren Länge und Richtung relativ zu der hohlzylindrischen Ausformung 4 des Werkstücks 2 können über grafisch dargestellte Messfahrtanker 24, 25 sowie 28 und 29 verändert werden. Zusätzlich kann der Benutzer den Zielpunkt 26 für die Ermittlung der Z-Referenzkoordinate weitgehend unabhängig von der Anordnung des X-Y-Auswahlobjekts 22 vorgeben. Über das X-Y-Auswahlobjekt 22 kann nicht nur die Position, sondern auch der Radius des X-Y-Auswahlobjekts 22 verändert werden.

Sobald die Eingabe des Benutzers abgeschlossen wird, kann zunächst die Z-Referenzkoordinate und anschließend die X-Y-Z-Ausgangskoordinate ermittelt werden, um danach in einem automatisiert ablaufenden Ermittlungsverfahren die gesuchte X-Y-Z-Referenzkoordinate des Werkstücks 2 zu bestimmen.

## Patentansprüche

1. Verfahren zur Bestimmung von einer X-Y-Z-Referenzkoordinate eines in einer Bearbeitungsmaschine angeordneten Werkstücks (2), wobei zunächst eine Abbildung des Werkstücks (2) mit einer Kameraeinrichtung (5) der Bearbeitungsmaschine erstellt und anschließend auf einer Anzeigeeinrichtung (6) angezeigt wird, wobei über die angezeigte Abbildung eine X-Y-Anzeigekoordinate (9) von einem Benutzer ausgewählt und eingegeben wird, wobei nachfolgend die Z-Referenzkoordinate automatisiert ermittelt wird, und wobei ausgehend von der automatisiert ermittelten Z-Referenzkoordinate und der von dem Benutzer eingegebenen X-Y-Anzeigekoordinate (9) die X-Y-Z-Referenzkoordinate ermittelt wird, **dadurch gekennzeichnet, dass** zur Ermittlung der X-Y-Z-Referenzkoordinate ausgehend von der automatisiert ermittelten Z-Referenzkoordinate und der von dem Benutzer eingegebenen X-Y-Anzeigekoordinate (9) zunächst eine X-Y-Z-Ausgangskoordinate berechnet wird, wobei eine Messvorrichtung (8) der Bearbeitungsmaschine automatisiert an die X-Y-Z-Ausgangskoordinate (7) verlagert wird, dass anschließend die X-Y-Z-Referenzkoordinate des Werkstücks (2) ausgehend von der durch die X-Y-Z-Ausgangskoordinate (7) vorgegebenen Position der Messeinrichtung (8) durch ein geeignetes Ermittlungsverfahren mit der Messeinrichtung (8) bestimmt wird, wobei als Messeinrichtung ein berührungsempfindlicher Messtaster (8) verwendet wird und der Messtaster (8) zur Ermittlung der Z-Koordinate durch den von der Kameraeinrichtung (5) erfassbaren Bereich in Richtung eines von dem Benutzer vorgegebenen Zielpunkts (26) verlagert wird, bis der Messtaster (8) das Werkstück (2) berührt.

2. Verfahren nach Anspruch 1, **dadurch gekennzeichnet, dass** der Zielpunkt (26) der X-Y-Anzeigekoordinate (9) entspricht oder separat durch den Benutzer auf der Anzeigeeinrichtung (6) vorgegeben wird.

3. Verfahren nach Anspruch 1 oder Anspruch 2, **dadurch gekennzeichnet, dass** der Messtaster (8) längs eines Sichtstrahls (16) ausgehend von der Kameraeinrichtung (5) in Richtung des Zielpunkts (26) verlagert wird.

4. Verfahren nach einem der vorausgehenden Ansprüche, **dadurch gekennzeichnet, dass** zur Auswahl der X-Y-Anzeigekoordinate (9) auf der angezeigten Abbildung ein von einem Benutzer eingegebenes grafisches Eingabeobjekt (20) automatisiert in ein X-Y-Auswahlobjekt (22) überführt und das X-Y-Auswahlobjekt (22) die angezeigte Abbildung des Werkstücks (2) überlagernd auf der Anzeigeeinrichtung (6) angezeigt wird.

5. Verfahren nach Anspruch 4, **dadurch gekennzeichnet, dass** der Benutzer über das X-Y-Auswahlobjekt (22) weitere Parameter für das automatisiert ablaufende Ermittlungsverfahren der Referenzkoordinaten des Werkstücks (2) eingegeben kann.

6. Verfahren nach Anspruch 5, **dadurch gekennzeichnet, dass** die von dem Benutzer über das X-Y-Auswahlobjekt (22) vorgegeben Parameter und gegebenenfalls weitere Parameter für das automatisiert ablaufende Ermittlungsverfahren in Maschinenparameter (27) überführt werden, die über eine Schnittstelleneinrichtung an eine Steuerungseinrichtung der Bearbeitungsmaschine übermittelt werden.

7. Bearbeitungsmaschine für die Bearbeitung eines Werkstücks (2) mit einer verfahrbaren Messeinrichtung (8) und mit einer Steuerungseinrichtung zur Steuerung der Messeinrichtung (8), wobei mit der Messeinrichtung (8) ausgehend von einer X-Y-Z-Ausgangskoordinate (7) in einem Ermittlungsverfahren eine X-Y-Z-Referenzkoordinate des für die Bearbeitung vorgesehenen Werkstücks (2) ermittelt werden kann, mit einer Bedieneinrichtung zur Eingabe von Steuerungsbefehlen durch einen Benutzer, mit einer grafischen Anzeigeeinrichtung (6) zur Anzeige von Benutzereingaben und mit einer Kameraeinrichtung (5), mit welcher eine Abbildung des in der Bearbeitungsmaschine angeordneten Werkstücks (2) aufgenommen und anschließend auf der Anzeigeeinrichtung (6) angezeigt werden kann, wobei die Messeinrichtung ein Messtaster (8) ist und die Bearbeitungsmaschine so eingerichtet ist, dass ein Verfahren gemäß den Ansprüchen 1 bis 6 durchgeführt werden kann.

8. Bearbeitungsmaschine nach Anspruch 7, **dadurch gekennzeichnet, dass** die Kameraeinrichtung (5) und die Messeinrichtung an einem Bearbeitungskopf der Bearbeitungsmaschine angeordnet sind.

9. Bearbeitungsmaschine nach einem der Ansprüche 7 oder 8, **dadurch gekennzeichnet, dass** die Anzeigeeinrichtung (6) ein berührungssensitives grafisches Display aufweist, so dass ein Benutzer durch Berühren des grafischen Displays ein grafisches Eingabeobjekt (20) zur Vorgabe der X-Y-Anzeigekoordinate (9) eingeben kann.

## Claims

1. Method for determining an X-Y-Z reference coordinate of a workpiece (2) arranged in a machine tool, wherein an image of the workpiece (2) is first created with a camera device (5) of the machine tool and is then displayed on a display device (6), wherein an X-Y display coordinate (9) is selected and entered by a user via the displayed image, wherein the Z reference coordinate is then determined in an automated manner, and wherein, based on the Z reference coordinate determined in an automated manner and the X-Y display coordinate (9) entered by the user, the X-Y-Z reference coordinate is determined, **characterised in that**, in order to determine the X-Y-Z reference coordinate on the basis of the Z reference coordinate determined in an automated manner and the X-Y display coordinate (9) entered by the user, an X-Y-Z starting coordinate is first calculated, wherein a measuring device (8) of the machine tool is displaced to the X-Y-Z starting coordinate (7) in an automated manner, the X-Y-Z reference coordinate of the workpiece (2) is then determined by the measuring device (8) by means of a suitable determination method, based on the position of the measuring device (8) defined by the X-Y-Z starting coordinate (7), wherein a touch-sensitive measuring probe (8) is used as the measuring device and, in order to determine the Z coordinate, the measuring probe (8) is displaced through the region detectable by the camera device (5) in the direction of a target point (26) specified by the user, until the measuring probe (8) touches the workpiece (2).

2. Method according to claim 1, **characterised in that** the target point (26) corresponds to the X-Y display coordinate (9) or is specified separately by the user on the display device (6).

3. Method according to claim 1 or claim 2, **characterised in that** the measuring probe (8) is displaced along a visual beam (16) starting from the camera device (5) in the direction of the target point (26).

4. Method according to one of the preceding claims, **characterised in that**, for the selection of the X-Y display coordinate (9) on the displayed image, a graphical input object (20) entered by a user is converted into an X-Y selection object (22) in an automated manner and the X-Y selection object (22) is displayed on the display device (6) superimposed on the displayed image of the workpiece (2).

5. Method according to claim 4, **characterised in that** the user can enter further parameters for the automated method of determining the reference coordinates of the workpiece (2) via the X-Y selection object (22).

6. Method according to claim 5, **characterised in that** the parameters specified by the user via the X-Y selection object (22) and optionally further parameters for the automated determination method are converted into machine parameters (27), which are transmitted to a controller of the machine tool via an interface device.

7. Machine tool for the machining of a workpiece (2), comprising a displaceable measuring device (8) and a controller for controlling the measuring device (8), wherein an X-Y-Z reference coordinate of the workpiece (2) intended for machining can be determined in a determination method using the measuring device (8) based on an X-Y-Z starting coordinate (7), and comprising an operating device for the input of control commands by a user, having a graphical display device (6) for displaying user inputs, and comprising a camera device (5) by means of which an image of the workpiece (2) arranged in the machine tool can be captured and then displayed on the display device (6), wherein the measuring device is a measuring probe (8) and the machine tool is configured in such a way that a method according to claims 1 to 6 can be performed.

8. Machine tool according to claim 7, **characterised in that** the camera device (5) and the measuring device are arranged on a machining head of the machine tool.

9. Machine tool according to one of claims 7 or 8, **characterised in that** the display device (6) has a touch-sensitive graphical display, such that a user can enter a graphical input object (20) for specifying the X-Y display coordinate (9) by touching the graphical display.

## Revendications

1. Procédé de détermination d'une coordonnée de référence X-Y-Z d'une pièce (2) disposée dans une machine d'usinage, dans lequel en premier lieu une image de la pièce (2) est créée avec un système de caméra (5) de la machine d'usinage puis est affichée sur un système d'affichage (6), dans lequel une coordonnée d'affichage X-Y (9) est sélectionnée et saisie par un utilisateur par l'intermédiaire de l'image affichage, dans lequel la coordonnée de référence Z est déterminée par la suite de manière automatisée, et dans lequel la coordonnée de référence X-Y-Z est déterminée en partant de la coordonnée de référence Z déterminée de manière automatisée et de la coordonnée d'affichage X-Y (9) saisie par l'utilisateur, **caractérisé en ce qu'**en premier lieu une coordonnée initiale X-X-Z est calculée en partant de la coordonnée de référence Z déterminée de manière automatisée et de la coordonnée d'affichage X-Y (9) saisie par l'utilisateur pour déterminer la coordonnée de référence X-Y-Z, dans lequel un dispositif de mesure (8) de la machine d'usinage est déplacé de manière automatisée sur la coordonnée initiale X-Y-Z (7), qu'ensuite la coordonnée de référence X-Y-Z de la pièce (2) est définie par un procédé de détermination adapté avec le système de mesure (8) en partant de la position, prédéfinie par la coordonnée initiale X-Y-Z (7), du système de mesure (8), dans lequel un palpeur de mesure (8) tactile est utilisé en tant que système de mesure et le palpeur de mesure (8) est déplacé en direction d'un point cible (26) prédéfini par l'utilisateur à travers la zone pouvant être détectée par le système de caméra (5) pour déterminer la coordonnée Z jusqu'à ce que le palpeur de mesure (8) touche la pièce (2).

2. Procédé selon la revendication 1, **caractérisé en ce que** le point cible (26) correspond à la coordonnée d'affichage X-Y (9) ou est prédéfini séparément par l'utilisateur sur le système d'affichage (6).

3. Procédé selon la revendication 1 ou la revendication 2, **caractérisé en ce que** le palpeur de mesure (8) est déplacé en direction du point cible (26) en partant du système de caméra (5) le long d'un rayon visible (16).

4. Procédé selon l'une quelconque des revendications précédentes, **caractérisé en ce que** pour sélectionner la coordonnée d'affichage X-Y (9) sur l'image affichée, un objet de saisie (20) graphique saisi par un utilisateur est transféré de manière automatisée dans un objet de sélection X-Y (22) et l'objet de sélection X-Y (22) est affiché sur le système d'affichage (6) tout en recouvrant l'image affichée de la pièce (2).

5. Procédé selon la revendication 4, **caractérisé en ce que** l'utilisateur peut saisir d'autres paramètres pour le procédé de détermination se déroulant de manière automatisée des coordonnées de référence de la pièce (2) par l'intermédiaire de l'objet de sélection X-Y (22).

6. Procédé selon la revendication 5,
**caractérisé en ce que** les paramètres prédéfinis par l'utilisateur par l'intermédiaire de l'objet de sélection X-Y (22) et éventuellement d'autres paramètres pour le procédé de détermination se déroulant de manière automatisée sont transférés dans des paramètres de machine (27) qui sont transmis à un système de commande de la machine d'usinage par l'intermédiaire d'un système d'interface.

7. Machine d'usinage pour l'usinage d'une pièce (2) avec un système de mesure (8) pouvant être déplacé et avec un système de commande pour commander le système de mesure (8), dans lequel une coordonnée de référence X-Y-Z de la pièce (2) prévue pour l'usinage peut être déterminée avec le système de mesure (8) en partant d'une coordonnée initiale X-Y-Z (7) dans un procédé de détermination, avec un système d'utilisation pour saisir des instructions de commande par un utilisateur, avec un système d'affichage (6) graphique pour afficher des saisies d'utilisateur et avec un système de caméra (5), avec lequel une image de la pièce (2) disposée dans la machine d'usinage peut être enregistrée puis peut être affichée sur le système d'affichage (6), dans lequel le système de mesure est un palpeur de mesure (8) et la machine d'usinage est mise au point de telle sorte qu'un procédé selon les revendications 1 à 6 peut être mis en œuvre.

8. Machine d'usinage selon la revendication 7, **caractérisée en ce que** le système de caméra (5) et le système de mesure sont disposés sur une tête d'usinage de la machine d'usinage.

9. Machine d'usinage selon l'une quelconque des revendications 7 ou 8, **caractérisée en ce que** le système d'affichage (6) présente un écran graphique tactile de telle sorte qu'un utilisateur peut saisir en touchant l'écran graphique un objet de saisie (20) graphique pour prédéfinir la coordonnée d'affichage X-Y (9).
